# EUROPEAN PATENT SPECIFICATION

(11) **EP 3 033 309 B1**
(45) Date of publication and mention of the grant of the patent: **03.10.2018**
(21) Application number: 14777835.1
(22) Date of filing: 12.08.2014
(51) Int. Cl.: C03B 40/00, C03B 23/035

(54) **A PROCESS FOR MANUFACTURING AN OPTICAL ELEMENT BY HOT FORMING A GLASS SHEET USING PRESSURE DIFFERENCE**
VERFAHREN ZUR HERSTELLUNG EINES OPTISCHEN ELEMENTS DURCH HEISSFORMUNG EINER GLASSCHEIBE MITTELS DRUCKDIFFERENZ
PROCÉDÉ POUR LA FABRICATION D'UN ÉLÉMENT OPTIQUE PAR FORMAGE À CHAUD D'UNE FEUILLE DE VERRE AU MOYEN DE LA DIFFÉRENCE DE PRESSION

(30) Priority: 12.08.2013 IT TO20130687
(43) Date of publication of application: 22.06.2016
(73) Proprietor: Istituto Nazionale Di Astrofisica - INAF, Roma (IT)
(72) Inventor: GHIGO, Mauro, I-00136 Roma (IT); PROSERPIO, Laura, I-00136 Roma (IT)
(74) Representative: Lisa, Elisabetta
(86) International application number: PCT/IB2014/063880
(87) International publication number: WO 2015/022643

(56) References cited:
- WO-A1-2010/111075
- WO-A1-2012/118612
- DE-A1- 10 147 648
- US-A- 5 573 566
- US-A1- 2005 061 034
- US-A1- 2005 235 698
- US-A1- 2010 077 798
- US-A1- 2011 205 485
- US-A1- 2012 144 866
- US-A1- 2013 081 428

## Description

### TECHNICAL FIELD

The present invention relates to a process for manufacturing an optical element by hot-forming a glass sheet.

### BACKGROUND ART

Known processes for manufacturing an optical element by hot-forming a glass sheet are as illustratively described in US 5 573 566 A, US 2011/0205485 A1, WO 2012/118612 A1, WO 2010/111075 A1 and US 2005/0061034 A1.

The preferred, yet not exclusive application of the invention is in the making of thin optical elements, such as, for example, adaptive optics or X-ray mirrors: without losing in generality, reference will be made hereinafter to X-ray grazing incidence optics for telescopes.

In order to improve (decrease) the weight/effective area ratio of the grazing incidence optics, the use of glass is taken into consideration because it allows to consider X-ray telescopes of increasingly larger size, for example with an effective area in the order of a few square meters, while maintaining the weight of the system within the limits set by the current rockets for launching into orbit (the systems may only operate from space, given the opacity of the Earth's atmosphere to the considered X-ray wavelengths). Effective areas in the order of 3-4 m² are obtained by using an optical arrangement named Wolter I, which includes a series of thin parabolic and hyperbolic annular mirrors (less than or equal to 2 mm thick, typically approximately 1 mm or less), arranged in co-axial and co-focal manner within one another, which is commonly named nested structure. Such mirrors reach diameters in the order of several meters.

For technological reasons, making such mirrors in one piece is unthinkable; each mirror is thus divided into a plurality of sectors. Conveniently, the homologous sectors of a series of concentric mirrors are preassembled (integrated) to one another to form stacks of mirror sectors, which are then assembled to one another to form the complete mirror.

The mirror sectors are obtained from flat, thin glass sheets by means of a hot-forming technique known as slumping, which consists in replicating the shape of an appropriate mold, for example of cylindrical shape (the final aspherical shape being then obtained during the integration process, which is not described because it is not part of present invention) in a glass sheet.

According to a known technique, a muffle made of material resistant to high temperatures and repeated thermal cycles, comprising a base element defining a central cavity and a cover, is used to shape the glass sheet.

A mold, the upper surface of which has the shape which is intended to be given to the glass sheet, is arranged in the central cavity of the base element.

The glass sheet is rested on the mold during the step of preparing of the process. A thin metal foil is arranged on the glass sheet and the cover is then closed, by peripherally restraining in fluid-tight manner the metal foil between the base element and the cover itself.

The muffle is thus placed in an oven and subjected to thermal cycle having the purpose of reducing the viscosity of the glass, by effect of which the glass sheet collapses on the mold and reproduces its shape.

In order to ensure a perfect contact of the glass sheet with the surface of the mold, a pressure is applied in the upper chamber of the muffle comprised between the cover and the metal foil, so that the latter exerts a uniform pressure on the glass sheet; further examples of such solutions are disclosed in the US patent applications nos. US 2005/0235698 A1, US 2013/0081428 A1, US 2012/0144866 A1 and US 2010/0077798 A1.

The aforesaid known process has the drawback of an insufficient process repeatability introduced by the metal foil; indeed, the metal foil may display defects or form creases which translate into local deformations of the glass sheet.

Furthermore, since possible imperfections of the metal foil may be reproduced on the glass sheet, the latter must necessarily be arranged with the optical surface in contact with the mold (direct slumping), which implies making the mold with a high degree of surface finish.

### DISCLOSURE OF INVENTION

It is the object of the present invention to provide a hot-forming process which is free from the aforesaid drawbacks.

This object is reached by a process according to claim 1.

### BRIEF DESCRIPTION OF THE DRAWINGS

For a better understanding of the present invention, a preferred embodiment will now be described by way of non-limitative example, with reference to the accompanying drawings, in which:
figure 1 illustrates a device for implementing a hot-forming process of a glass sheet according to the present invention;
figures 2, 3, 4, 5, 6, 7, 8 and 9 diagrammatically illustrate the subsequent steps of the process; and
figure 10 is a chart which shows a thermal cycle to which the glass sheet is subjected during the process.

### BEST MODE FOR CARRYING OUT THE INVENTION

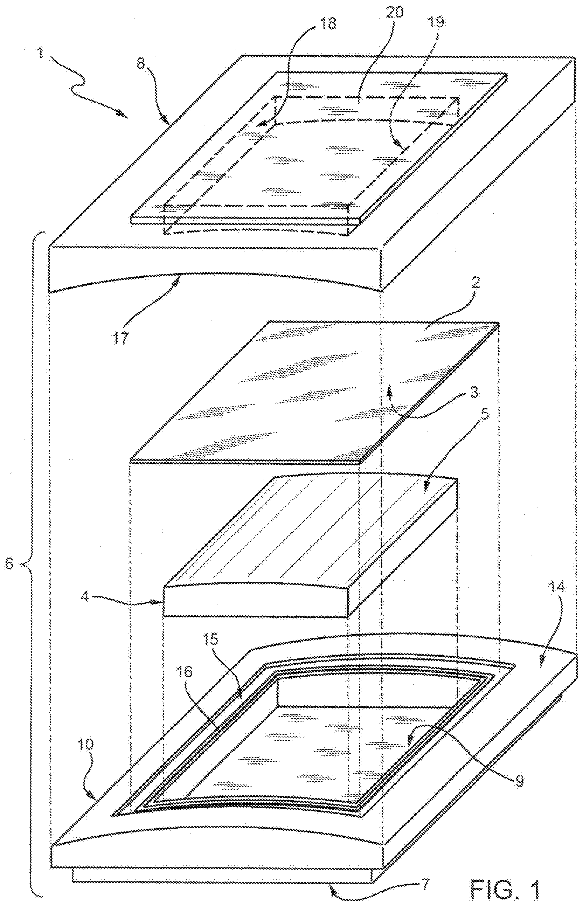

With reference to figure 1, reference numeral 1 is a device for implementing the hot-forming process of a glass sheet 2 according to the present invention.

The glass sheet 2 is a semi-finished starting product for making an aspherical (for example, parabolic) mirror sector for an X-ray grazing incidence telescope by means of the method of the invention.

For example, the size of the glass sheet 2 is 340 x 340 mm and the thickness is equal to 0.4 mm. Glasses which may be used for this purpose are, for example, D263 glass and AF32 glass made by SCHOTT AG. In figure 1, reference numeral 3 is the optical surface of the glass sheet 2, i.e. the face of the glass sheet adapted to form a portion sector of the optical surface of the mirror, in use.

The device 1 comprises a mold 4 having an upper surface 5 which reproduces the shape to be given to the optical surface 3 of the glass sheet 2 by means of the process described below (direct slumping). It is worth noting that the process of the invention may also be used for indirect slumping, i.e. in which the glass sheet is placed with the back (i.e. the face opposite to the optical surface) in contact with the surface 5 of the mold 4.

The surface 5 of the mold 4 is conveniently cylindrical with a curvature radius depending from the size of the mirror, a sector of which is being made, and in the case in point is in the order of size of 1 m.

The mold 4 is conveniently made of a material resistant to heat and to repeated thermal cycles. Materials which can be used for this purpose are, for example, Fused Silica and Zerodur K20 made by Schott.

The first requires an anti-sticking coating layer, for example platinum (preferably 5 nm of chromium + 50 nm of platinum); the second does not display sticking problems with the glass, and thus does not require an anti-sticking layer.

The device comprises a muffle 6 made of stainless steel adapted to high temperatures and repeated thermal cycles, for example an AISI 310 steel, in which the mold 4 is housed.

According to the described example, the muffle 6 comprises a base element 7 and a cover 8.

The base element 7, with substantially square plan, has a central cavity 9 for housing the mold 4, which is open upwards and is delimited laterally by a frame portion 10. The frame portion 10 is delimited on the top by a peripheral closure surface 14 adapted to cooperate with the cover 8, and forms a slightly recessed seat 15 along an inner edge thereof adapted to cooperate with the peripheral edge of the glass sheet 2.

Conveniently, the glass sheet 2 does not rest in direct contact with the metal surface of the seat 15, but rests on a rest element 16 carried thereon, having the purpose of allowing the glass sheet 2 to move parallel to itself, thus compensating for differential thermal expansions between glass sheet 2 and muffle 6.

Conveniently, the rest element 16 consists of a felt strip resistant to high temperatures, for example, the material named Superwool Plus Paper made by Morgan Thermal Ceramics, having a thickness of approximately 2 mm, carried along each side of the seat 15.

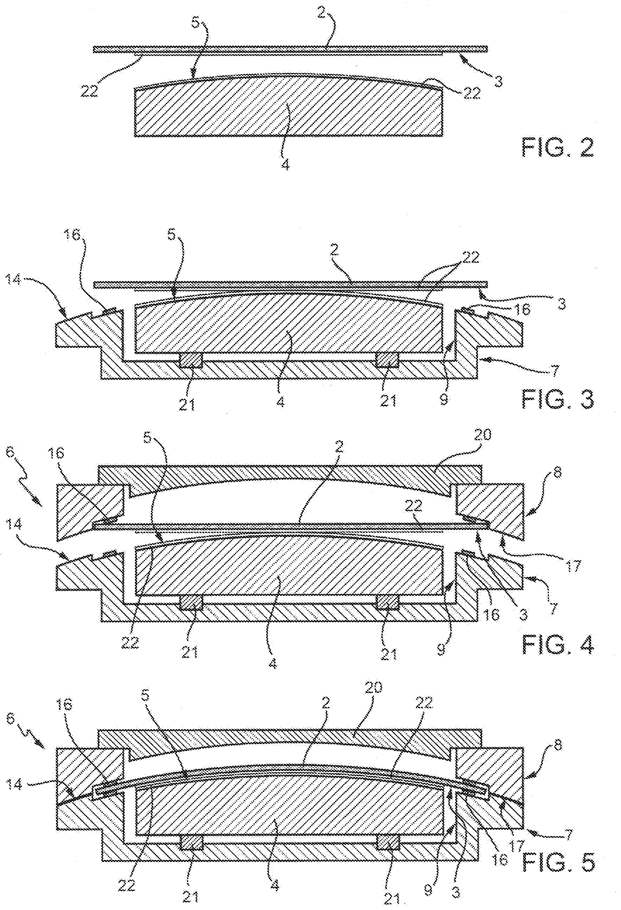

Inferiorly, the cover 8 has a peripheral closure surface 17 of a shape mating with the closure surface 14 of the base element 7. Conveniently, the closure surface 17 also has a slightly recessed inner seat (not shown in figure 1 but diagrammatically illustrated in figures 2-9).

In general, the closure surfaces 14, 17 of the base element 7 and of the cover 8 of the muffle 6 may have an appropriate shape to mate with the shape of the mold 4 as much as possible; in all cases, there cannot be high curvatures on two axes or the glass sheet 2 would break. Furthermore, as the thickness of the glass sheet 2 increases, the permissible cold bending deformation decreases, also on a single axis. In case of thick glass sheets, the permissible cold deformation is substantially zero, and thus the closure surface 14, 17 must be flat.

The cover 8 may be monolithic or, as in the illustrated example, have a central opening 18 closed by a removable upper plate 20, the purpose of which will be explained below.

Also the cover 8 forms an inner cavity 19 surrounded by the closure surface 17.

Figures from 2 to 9 diagrammatically illustrate the subsequent steps of a preferred embodiment of the method object of the present invention.

Figure 2 illustrate a first step in which a protective layer 22 of peelable varnish is applied to the previously cleaned upper surface 5 of the mold 4 and optical surface 3 of the glass sheet, the protective layer incorporating any possible residue of dust on the aforesaid surfaces and protects them from any further contamination during the preparatory steps of the method.

An example of peelable varnish which can be used for this purpose is the product First Contact made by Photonic Cleaning Technologies, conveniently in the red version to facilitate viewing during application.

Alternatively, an electrostatic film which does not leave residues on the surfaces and which attracts present dust during removal may be used.

The preliminary cleaning of the glass sheet 2 and of the mold may consist, for example, in washing with bidistilled water (to avoid lime residues), liquid soap and AmberClean™GC95L Aqueous Glass Cleaner made by Saint Gobain.

Drying is vertical under a laminar flow of filtered air (not containing dust larger than 0.5 micron).

Also the muffle 6 and all the instruments used during the step of preparing of the process are cleaned with lens tissue and alcohol or acetone. The entire process is prepared in a clean environment, conveniently in ISO 5 class according to ISO 14644-1 standards.

Subsequently (figure 3), the mold 4 is positioned inside the cavity 9 of the base element 7 of the muffle 6 on three rest feet 21 (two of which are visible in figures from 2 to 9) which isolate it from the bottom of the base element 7 and ensure the correct vertical positioning thereof.

The glass sheet 2 is rested with the painted or protected surface on the upper surface 5 of the mold and with the peripheral edge thereof on the rest element 16 at two opposite central areas on the curved sides of the seat 15, not shown in figure.

In a subsequent step (figure 4), the cover 8 is placed on the base element 7 of the muffle 6, so that, once lowered, the glass sheet 2 is cold-bended (figure 5).

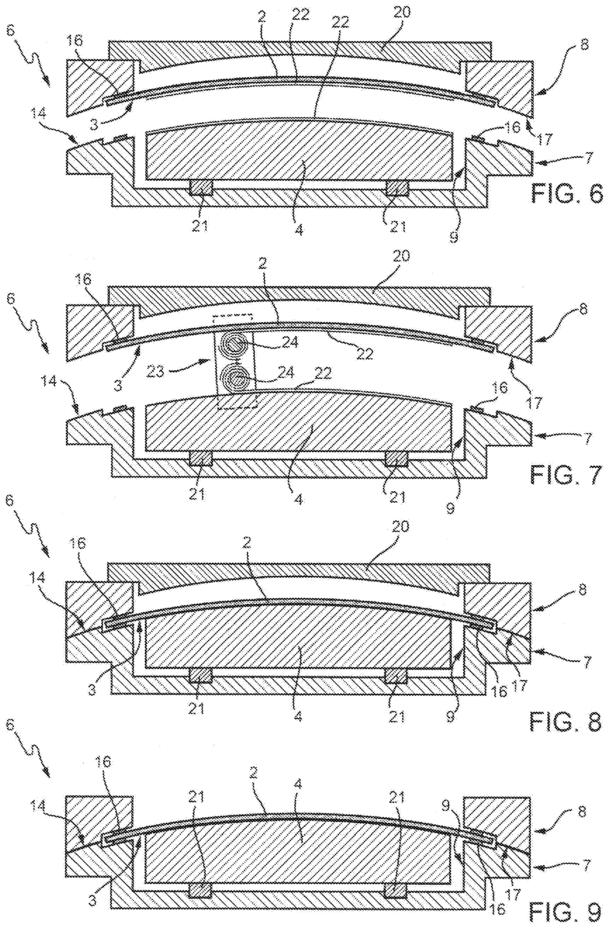

By using a pump (not shown), air is aspirated from the cavity 19 of the cover 8, and the depression which is created is adequate to maintain the glass sheet adherent to the cover 8 (the felt rest element 16 between the glass sheet 2 and the cover 8 guarantees a minimum fluid-tightness). Therefore, the cover 8 may be raised from the base element 7, taking the glass sheet 2 with it (figure 6) and maintained suspended at a given distance from the base element 7.

At this point, the peelable varnish layers 22 may be removed from the mold 4 and from the glass sheet 2 simultaneously (figure 7). Very importantly, this step must be carried out before the definitive closing of the muffle 6 because it guarantees that dust particles are not deposited on the surface 5 of the mold 4 and on the optical surface 3 of the glass sheet 2.

The removal speed of the varnish is very important and must be as slow as possible to avoid the formation of electrostatic charges which can attract dust from the surrounding environment. The preferred removal speed values are smaller than 50 mm/min, preferably approximately 30 mm/min.

Conveniently, the varnish is removed by means of a device 23 comprising two counter-rotating rollers 24 actuated by an electric motor (not shown), the rotation of which is also transmitted to two wheels which feed the entire device 23 parallel to closure surfaces 14 and 17 by rolling on the closure surface 14.

The muffle 6 is re-closed once all the varnish has been removed (figure 8). The pump is stopped because it is no longer necessary: the glass sheet 2 is now held in position by the resting elements 16 of the base element 7 and of the cover 8, with a slight sliding freedom to compensate for differential expansions/shrinkage as the temperature varies due to different thermal coefficient factors of the materials involved.

At this point, the muffle 6 is positioned in an electric resistance oven in order to subject the glass sheet 2 to a thermal cycle which includes a relatively fast warming up to a maximum temperature higher than the glass transition temperature (Tg), maintaining the aforesaid temperature for a period of time sufficient for slumping, cooling as slowly as possible to annealing temperature to prevent the onset of internal strains, and relatively fast cooling to ambient temperature.

As per the invention, the maximum temperature is 2-12% higher, and preferably 3-4% higher, than Tg.

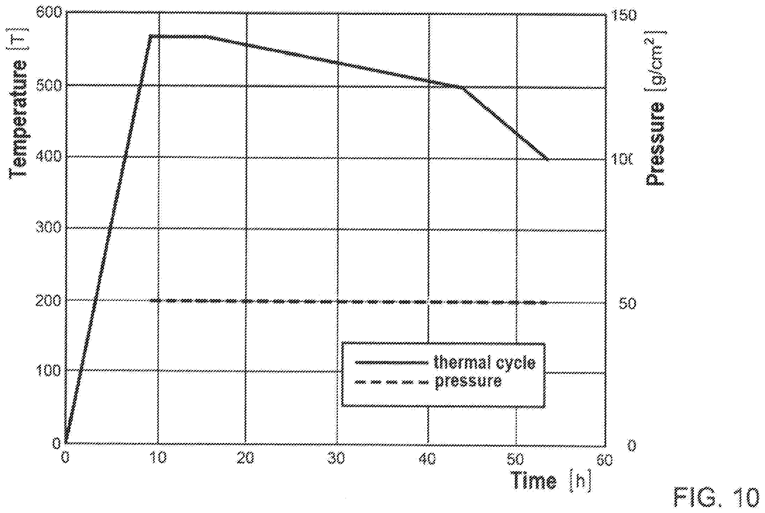

Figure 10 shows an example of thermal cycle used for D263 glass on a quartz mold:
1) warm up ramp at 50-60°C/h to a maximum temperature comprised between 570°C and 575°C;
2) maintaining the maximum temperature for some hours (for example, from 2 to 8 hours);
3) slow cooling ramp with gradient of less than 5°C/h, preferably 2.5°C/h, to a temperature of approximately 500°C; and
4) cooling ramp at 5-60°C/h, preferably at 10°C/h to approximately 400°C, then free cooling.

During the thermal cycle, and conveniently when the maximum temperature is reached, a pressure is applied to the glass sheet 2 to promote slumping on the mold, which is maintained until end of cycle. Preferably, for this purpose, air is aspirated from the cavity 9 so that the ambient pressure in the cavity 19 presses the glass sheet 2 against the mold 4. As per the invention, the maximum pressure differential is lower than 150 g/cm², a preferred value is 50 g/cm².

Before performing the thermal cycle, the upper plate 20 of the cover 8 may be removed to allow to observe the glass sheet and detect possible faults during the slumping process. In this case, in order to prevent the glass sheet 2 from being directly exposed to radiation by the resistors of the oven, a plate (not shown) may be conveniently arranged over the opening 18 of the cover 8, at a given distance therefrom (for example, 80 mm).

Alternatively, if the cover 8 is monolithic, a pressure in the cavity 19, instead of a depression in the cavity 9, may be applied during the performance of the thermal cycle.

In all cases, maintaining a pressure differential between cavity 19 and cavity 9 is essential.

From an examination of the features of the described process, the advantages that it allows to obtain are apparent.

The resort to metal foil as pressing element is eliminated because the pressure is exerted directly by the air directly on the glass sheet being processed. Therefore, the problems of repeatability induced by the foil are eliminated.

The use of a rest element 16 which allows a given freedom of movement to the glass sheet 2 parallel to itself allows to compensate for the differential thermal expansions between glass sheet and muffle and to avoid them translating into undesired strains on the glass sheet itself.

The use of the peelable varnish allows to protect the surfaces of the mold and of the glass sheet until the muffle is closed and, by virtue of the low removal speed of the varnish, avoids the formation of electrostatic charges which could promote the attraction of dust particles.

It is finally apparent that changes and variations can be implemented to the process described by way of example without departing from the scope of protection of the claims.

For example, the type of glass used and its thickness may be varied.

Slumping may be of the indirect type, i.e. made by arranging the back of the glass sheet into contact with the mold. This would allow to make the mold with a lower surface finish.

Glass sheets of greater thickness could be used, for example, for making optics of different type, also for amateur applications. In this case, the closure surfaces of the muffle could be flat instead of cylindrical because of the difficulty of cold folding thick glass sheets. The shape, size and material of the mold could be different. For example, the mold could have a circular shape with a spherical surface.

## Claims

1. A process for manufacturing an optical element by hot-forming a glass sheet (2), comprising the steps of:
- setting a mold (4) provided with a surface (5) reproducing the shape to be given to the glass sheet (2) into a cavity (9) of a base element (7) of a muffle (6);
- positioning the glass sheet (2) on the mold (4) with a peripheral edge superimposed to a closure area (14, 15) of the base element (7) surrounding said cavity (9);
- closing a cover (8) of said muffle (6) onto the base element (7), so that a closure area (17) of the cover (8) maintains the peripheral edge of the glass sheet (2) in contact with the closure area (14, 15) of the base element (7);
- running a thermal cycle including the step of warming up to a maximum temperature greater than the glass transition temperature of the glass and a step of controlled cooling; and
- at or after reaching the maximum temperature, generating a pressure difference between the base element (7) and the cover (8) so as to press the glass sheet (2) onto the mold (4),
**characterized in that** said maximum temperature is greater than the glass transition temperature of the glass by 2-12%, and preferably by 3-4%, **and in that** the surface (5) of the mold (4) has a cylindrical shape, **and in that** the maximum pressure difference is lower than 150 g/cm².

2. A process as claimed in claim 1, **characterized in that** said thermal cycle includes the step of maintaining the maximum temperature for at least 2 hours.

3. A process as claimed in claim 1, **characterized in that** said controlled cooling step includes the step of cooling with a gradient of less than 5°C/h at least until the glass annealing temperature is reached.

4. A process as claimed in claim 1, **characterized in that** at least one of said closure area (14, 15) of the base element (7) and said closure area (17) of the cover (8) includes yielding rest means (16) configured to cooperate with the peripheral edge of the glass sheet (2) and to allow a relative movement in a direction parallel to the glass sheet (2).

5. A process as claimed in claim 4, **characterized in that** the yielding rest means are constituted by a felt strip (16).

6. A process as claimed in any of the preceding claims, **characterized in that** said closure areas (14, 15; 17) of said base element (7) and of said cover (8) have a non-planar shape causing cold-deforming of the glass sheet (2) upon closing the cover (8).

7. A process as claimed in claim 6, **characterized in that** the closure areas (14, 15; 17) of the base element (7) and the cover (8) have a cylindrical shape.

8. A process as claimed in any of the preceding claims 1 to 5, **characterized in that** the closure areas (14, 15; 17) of the base element (7) and the cover (8) have a planar shape.

9. A process as claimed in any of the preceding claims, **characterized by** comprising the preliminary step of applying a protective layer (22), such as a peelable varnish or an electrostatic film, on each of the surfaces (3; 5) of the glass sheet (2) and the mold (4).

10. A process as claimed in claim 9, **characterized by** including, after said step of applying the protecting layers (22) on the surfaces of the glass sheet (2) and the mold (4), the steps of:
- placing the glass sheet (2) onto the mold (4);
- closing the cover (8) of said muffle (6) onto the base element (7), so as to constrain the peripheral edge of the glass sheet (2) in contact with the closure area (14, 15) of the base element (7) and possibly cold-deform said glass sheet (2);
- producing a depression within the cover (8);
- raising the cover (8), the glass sheet (2) remaining suspended to the cover (8) because of the depression and facing the mold (4);
- removing the protective layers (22) from the glass sheet (2) and the mold (4) simultaneously;
- re-closing the cover (8);
- running said thermal cycle; and
- applying said pressure difference.

11. A process as claimed in claim 9 or 10, **characterized in that** said step of removing the protective layers (22) is performed at a speed less than 50 mm/min.

12. A process as claimed in any of claims 9-11, **characterized in that** said step of removing the protective layers (22) is performed by means of a device (23) including two driven, counter-rotating rollers (24) to which the protective layers applied to the mold (4) and, respectively, the glass sheet (2) are caused to adhere, said rollers (24) being moved parallel to said glass sheet (2) .

## Patentansprüche

1. Verfahren zum Herstellen eines optischen Elements durch Heißverformen einer Glasscheibe (2) mit den Schritten:
- Einsetzen einer Form (4), die eine Oberfläche (5) aufweist, welche die der Glasscheibe (2) zu gebende Form wieder gibt, in einen Hohlraum (9) eines Basiselements (7) einer Muffel (6);
- Positionieren der Glasscheibe (2) auf der Form (4), so dass ein äußerer Rand einen Verschlussbereich (14, 15) des Basiselements (7), das den Hohlraum (9) umgibt, überdeckt;
- Schließen einer Abdeckung (8) der Muffel (6) auf dem Basiselement (7), so dass ein Verschlussbereich (7) der Abdeckung (8) den äußeren Rand der Glasscheibe (2) in Kontakt mit dem Verschlussbereich (14,15) des Basiselements (7) hält;
- Durchführen eines thermischen Zyklus, der einen Aufwärmschritt auf eine Maximaltemperatur, die größer als die Glasübergangstemperatur des Glases ist, und einen Schritt der kontrollierten Abkühlung enthält;
- Erzeugen eines Druckunterschieds zwischen dem Basiselements (7) und der Abdeckung (8), so dass die Glasplatte (2) auf die Form (4) gedrückt wird, bei oder nach Erreichen der Maximaltemperatur,
- **dadurch gekennzeichnet, dass** die Maximaltemperatur 2-12%, vorzugsweise um 3-4%, größer als die Glasübergangstemperatur des Glases ist, **und dass** die Oberfläche (5) der Form (4) eines zylindrischen Form hat, **und dass** die maximale Druck Differenz kleiner als 150 g/cm² ist.

2. Verfahren nach Anspruch 1, **dadurch gekennzeichnet, dass** der thermische Zyklus den Schritt des Haltens der Maximaltemperatur für wenigstens 2 Stunden beinhaltet.

3. Verfahren nach Anspruch 1, **dadurch gekennzeichnet, dass** der kontrollierte Abkühlschritt den Schritt des Abkühlens mit einem Gradienten von weniger als 5 °C/h beinhaltet, bis wenigstens die Glasanlasstemperatur erreicht ist.

4. Verfahren nach Anspruch 1, **dadurch gekennzeichnet, dass** der Verschlussbereich (14,15) des Basiselements (7) und/oder der Verschlussbereich (17) der Abdeckung (8) nachgebende Stützmittel (16) aufweist, die dazu ausgelegt sind, mit dem äußeren Rand der Glasscheibe (2) zusammen zu wirken und eine Relativbewegung in einer Richtung parallel zur Glasscheibe (2) zu erlauben.

5. Verfahren nach Anspruch 4, **dadurch gekennzeichnet, dass** die nachgiebigen Stützmittel durch einen Filzstreifen (16) gebildet sind.

6. Verfahren nach einem vorstehenden Ansprüche, **dadurch gekennzeichnet, dass** die Verschlussbereiche (14, 15; 17) des Basiselements (7) und der Abdeckung (8) eine nicht-ebene Form haben, die eine Kaltverformung der Glasscheibe (2) beim Schließen der Abdeckung (8) bewirkt.

7. Verfahren nach Anspruch 6, **dadurch gekennzeichnet, dass** die Verschlussbereiche (14, 15; 17) des Basiselements (7) und der Abdeckung (8) eine zylindrische Form haben.

8. Verfahren nach einem der vorstehenden Ansprüche 1 bis 5, **dadurch gekennzeichnet, dass** die Verschlussbereich (14, 15; 17) des Basiselements (7) und der Abdeckung (8) eine ebene Form haben.

9. Verfahren nach einem der vorstehenden Ansprüche, **gekennzeichnet durch** das Enthalten eines einleitenden Schritts des Aufbringens einer Schutzschicht (22), etwa einen abziehbaren Lack oder einen elektrostatischen Film, auf jede der Oberflächen (3; 5) der Glasscheibe (2) und der Form (4).

10. Verfahren nach Anspruch 9, **dadurch gekennzeichnet, dass** nach dem Schritt des Aufbringens der Schutzschicht (22) auf die Oberflächen der Glasscheibe (2) und der Form (4) die folgenden Schritte durchgeführt werden:
- Platzieren der Glasscheibe (2) auf der Form (4);
- Schließen der Abdeckung (8) der Muffel (6) auf dem Basiselement (7), so dass der äußere Rand der Glasscheibe (2) in Kontakt mit dem Verschlussbereich (14, 15) des Basiselements (7) gehalten und die Glasscheibe (2) möglicherweise kalt verformt wird;
- Erzeugen einer Vertiefung in der Abdeckung (8);
- Anheben der Abdeckung (8), wobei die Glasscheibe (2) wegen der der Form (4) zugewandten Vertiefung der Abdeckung (8) ausgesetzt bleibt;
- Gleichzeitiges Entfernen der Schutzschichten (22) von der Glasscheibe (2) und der Form (4);
- Erneutes Schließen der Abdeckung (8);
- Durchführen des thermischen Zyklus; und
- Anlegen der Druckdifferenz.

11. Verfahren nach Anspruch 9 oder 10, **dadurch gekennzeichnet, dass** der Schritt des Entfernens der Schutzschichten (22) mit einer Geschwindigkeit von weniger als 50mm/min durchgeführt wird.

12. Verfahren nach einem der Ansprüche 9 bis 11, **dadurch gekennzeichnet, dass** der Schritt des Entfernens der Schutzschichten (22) mittels einer Vorrichtung (23) durchgeführt wird, die zwei angetriebene, gegenläufig rotierende Rollen (24) aufweist, an denen die Schutzschichten (22), die an der Form (4) und der Glasscheibe (2) angebrachten sind, zum Anhaften gebracht werden, wobei die Rollen (24) parallel zu der Glasscheibe (2) bewegt werden.

## Revendications

1. Procédé de fabrication d'un élément optique par formage à chaud d'une feuille de verre (2), comprenant les étapes :
- installer un moule (4), comportant une surface (5) reproduisant la forme à donner à la feuille de verre (2), dans une cavité (9) d'un élément de base (7) d'un moufle (6) ;
- positionner la feuille de verre (2) sur le moule (4) avec un bord périphérique superposé sur une zone de fermeture (14, 15) de l'élément de base (7) entourant ladite cavité (9) ;
- fermer un couvercle (8) dudit moufle (6) sur l'élément de base (7), de telle sorte qu'une zone de fermeture (17) du couvercle (8) maintient le bord périphérique de la feuille de verre (2) en contact avec la zone de fermeture (14, 15) de l'élément de base (7) ;
- exécuter un cycle thermique comprenant l'étape de chauffage à une température maximale supérieure à la température de transition vitreuse du verre et une étape de refroidissement contrôlé ; et
- à ou après l'atteinte de la température maximale, générer une différence de pression entre l'élément de base (7) et le couvercle (8) de façon à presser la feuille de verre (2) sur le moule (4),
**caractérisé par le fait que** ladite température maximale est supérieure à la température de transition vitreuse du verre de 2 - 12 %, et de préférence de 3 - 4 %, et **par le fait que** la surface (5) du moule (4) a une forme cylindrique, et **par le fait que** la différence de pression maximale est de moins de 150 g/cm².

2. Procédé selon la revendication 1, **caractérisé par le fait que** ledit cycle thermique comprend l'étape de maintien de la température maximale pendant au moins 2 heures.

3. Procédé selon la revendication 1, **caractérisé par le fait que** ladite étape de refroidissement contrôlé comprend l'étape de refroidissement avec un gradient de moins de 5°C/h au moins jusqu'à ce que la température de recuit du verre soit atteinte.

4. Procédé selon la revendication 1, **caractérisé par le fait qu'**au moins une parmi ladite zone de fermeture (14, 15) de l'élément de base (7) et ladite zone de fermeture (17) du couvercle (8) comprend des moyens de support coulissants (16) configurés pour coopérer avec le bord périphérique de la feuille de verre (2) et permettre un mouvement relatif dans une direction parallèle à la feuille de verre (2).

5. Procédé selon la revendication 4, **caractérisé par le fait que** les moyens de support coulissants sont constitués d'une bande de feutre (16).

6. Procédé selon l'une quelconque des revendications précédentes, **caractérisé par le fait que** lesdites zones de fermeture (14, 15 ; 17) dudit élément de base (7) et dudit couvercle (8) ont une forme non plane entraînant une déformation à froid de la feuille de verre (2) lors de la fermeture du couvercle (8).

7. Procédé selon la revendication 6, **caractérisé par le fait que** les zones de fermeture (14, 15 ; 17) de l'élément de base (7) et du couvercle (8) ont une forme cylindrique.

8. Procédé selon l'une quelconque des revendications 1 à 5, **caractérisé par le fait que** les zones de fermeture (14, 15 ; 17) de l'élément de base (7) et du couvercle (8) ont une forme plane.

9. Procédé selon l'une quelconque des revendications précédentes, **caractérisé par le fait qu'**il comprend l'étape préliminaire d'application d'une couche de protection (22), tel qu'un vernis pelable ou un film électrostatique, sur chacune des surfaces (3 ; 5) de la feuille de verre (2) et du moule (4).

10. Procédé selon la revendication 9, **caractérisé par le fait qu'**il comprend, après ladite étape d'application des couches de protection (22) sur les surfaces de la feuille de verre (2) et du moule (4), les étapes :
- placer la feuille de verre (2) sur le moule (4) ;
- fermer le couvercle (8) dudit moufle (6) sur l'élément de base (7), de façon à contraindre le bord périphérique de la feuille de verre (2) en contact avec la zone de fermeture (14, 15) de l'élément de base (7) et éventuellement déformer à froid ladite feuille de verre (2) ;
- produire une dépression à l'intérieur du couvercle (8) ;
- soulever le couvercle (8), la feuille de verre (2) restant suspendue au couvercle (8) en raison de la dépression et faisant face au moule (4) ;
- retirer les couches de protection (22) à partir de la feuille de verre (2) et du moule (4) simultanément ;
- refermer le couvercle (8) ;
- exécuter ledit cycle thermique ; et
- appliquer ladite différence de pression.

11. Procédé selon la revendication 9 ou 10, **caractérisé par le fait que** ladite étape de retrait des couches de protection (22) est réalisée à une vitesse de moins de 50 mm/min.

12. Procédé selon l'une quelconque des revendications 9 à 11, **caractérisé par le fait que** ladite étape de retrait des couches de protection (22) est réalisée au moyen d'un dispositif (23) comprenant deux rouleaux contrarotatifs entraînés (24) auxquels les couches de protection appliquées sur le moule (4) et, respectivement, la feuille de verre (2) sont amenées à adhérer, lesdits rouleaux (24) étant déplacés parallèlement à ladite feuille de verre (2).
